# EUROPÄISCHE PATENTANMELDUNG

(11) **EP 2 158 871 A2**
(43) Veröffentlichungstag der Anmeldung: **03.03.2010**
(21) Anmeldenummer: 09010576.8
(22) Anmeldetag: 18.08.2009
(51) Int. Cl.: A61C 8/00

(54) **Medizinisches Implantat und Verfahren zu seiner Herstellung**

(30) Priorität: 29.08.2008 DE 102008045020
(71) Anmelder: TuTech Innovation GmbH, 21079 Hamburg (DE); Technische Universität Hamburg-Harburg, 21073 Hamburg (DE)
(72) Erfinder: Emmelmann, Claus, 21220 Seevetal (DE); Rehme, Olaf, 20148 Hamburg (DE)
(74) Vertreter: Hauck Patent- und Rechtsanwälte

(57) **Zusammenfassung**

Die Erfindung betrifft ein medizinisches Implantat. Erfindungsgemäß ist vorgesehen, dass zumindest eine äußere Mantelschicht des Implantats aus einer Vielzahl in ihrer Längsrichtung versetzt zueinander angeordneten Spiralen aufgebaut ist, wobei zwischen den Spiralen Hohlräume verbleiben. Die Erfindung betrifft außerdem ein Verfahren zur Herstellung eines solchen Implantats.

## Beschreibung

Die Erfindung betrifft ein medizinisches Implantat, beispielsweise ein Zahnwurzelimplantat und ein Verfahren zu seiner Herstellung. In den vergangenen Jahrzehnten wurde die medizinische Implantologie, insbesondere die enossale Implantologie für die Versorgung von Defekten im Zahn- bzw. Zahnwurzelbereich maßgeblich weiterentwickelt. Dabei sind Techniken bekannt, bei denen Implantate im Inneren des Kieferknochens verankert werden, wobei der Implantatkörper die Kortikalis typischerweise penetriert. Für die sichere Verankerung solcher Implantate ist neben einem ausreichenden Knochenangebot in Form ausreichender Knochenhöhe, -breite und -form auch die Dichte des Knochens und somit die Knochenqualität von Bedeutung. Da es mit zunehmendem Alter (ca. ab dem 45. Lebensjahr) zu osteoporotischen Veränderungen durch die physiologische Abnahme der Spongiosadichte durch hormonell bedingte Osteoblasteninsuffizienz kommt, nimmt die Knochenqualität ab. Bei einer gleichzeitig steigenden Lebenserwartung der Bevölkerung und dem daraus resultierenden steigenden Durchschnittsalter der Patienten muss daher häufiger mit Krankheitsfällen mit verminderter Knochenqualität gerechnet werden.

Die Implantologie und insbesondere die enossale Implantologie unterscheidet verschiedene Implantattypen. So stehen Schraubenimplantate (TPS-Schraube, Ledermann-Schraube, Branemark-Schraube und ITI-Bonefit-Schraube), Zylinderimplantate (IMZ-Implantat, Integral-Implantat, Frialit-1- und 2-Stufenzylinder) sowie Blattimplantate (z.B. Biolox oder ein- bzw. zweiphasige Blattimplantate aus Titan) zur Verfügung. Um ein optimales Einwachsen des Implantats in den umgebenden Knochen, beispielsweise einen Kieferknochen, zu gewährleisten, ist es aus DE 195 23 038 A1 bekannt, die Oberfläche des Implantats mit umlaufenden Nuten zu versehen. Aus DE 41 05 165 C2 ist ein Implantatkörper mit einem Maschenwerk bekannt, der ebenfalls ein verbessertes Einwachsen des Knochenmaterials in das Implantat bewirken soll. Zu dem gleichen Zweck wird in DE 197 07 310 C2 ein Implantat mit einer aufgefaserten Oberfläche vorgeschlagen. Zur bestmöglichen Nachbildung der natürlichen Funktion einer Zahnwurzel wird in DE 42 170 82 C2 die Herstellung von Zahnwurzelimplantaten aus Formgedächtnislegierungen vorgeschlagen.

Grundsätzlich stellt die Integration von Fremdkörpern (Implantaten) in den menschlichen oder tierischen Körper eine große Herausforderung dar, da der Organismus auf nicht biologisches körperfremdes Material mit Abstoßung reagiert. Außerdem hängt von einem optimalen Einwachsen der umgebenden Knochenstruktur in das Implantat sowohl die Ausheilzeit als auch die Langzeitstabilität des Implantats in entscheidender Weise ab. Die bislang eingesetzten Implantate sind hinsichtlich ihrer Oberflächen üblicherweise auf einen bestimmten Gewebetyp (z.B. Knochen) optimiert. Dennoch besteht in der Praxis das Problem, dass die Ausheilzeit und die Lebensdauer bekannter Implantate nicht immer zufriedenstellend sind. Außerdem ist die Herstellung der bekannten Implantate aufwendig und erlaubt hinsichtlich der Ausgestaltung der Implantate nur eine geringe Flexibilität.

Ausgehend von dem erläuterten Stand der Technik liegt der Erfindung daher die Aufgabe zugrunde, ein medizinisches Implantat und ein Verfahren zu seiner Herstellung zur Verfügung zu stellen, wobei das Implantat verbesserte Eigenschaften bezüglich des Einwachsens des umgebenden Knochengewebes und eine hohe Lebensdauer besitzt und gleichzeitig flexibel und einfach herstellbar ist.

Diese Aufgabe wird durch die Gegenstände der unabhängigen Ansprüche 1 und 13 gelöst. Vorteilhafte Ausgestaltungen finden sich in den abhängigen Ansprüchen sowie der Beschreibung und den Figuren.

Für ein medizinisches Implantat löst die Erfindung die Aufgabe dadurch, dass zumindest eine äußere Mantelschicht aus einer Vielzahl von in ihrer Längsrichtung versetzt zueinander angeordneten Spiralen aufgebaut ist, wobei zwischen den Spiralen Hohlräume verbleiben. Insbesondere ist die Mantelschicht aus einer Vielzahl zylindrischer oder konischer (trichterförmiger) Spiralen (Wendeln) aufgebaut, die konzentrisch, jedoch entlang einer gemeinsamen Achse versetzt angeordnet sind. Die Hohlräume bilden dabei insbesondere offene Porositäten, die nach der Überlagerung aller Spiralen innerhalb des Mantelvolumens verbleiben. Die Hohlräume sind also insbesondere nicht von allen Seiten umschlossen, sondern von außen zugänglich, damit Knochengewebe in die Hohlräume einwachsen kann. Bei dem medizinischen Implantat kann es sich beispielsweise um ein Zahnwurzelimplantat handeln, das die Funktion der natürlichen Zahnwurzel eines Menschen oder eines Tieres übernimmt. Erfindungsgemäß bilden die Spiralen mit den Hohlräumen ein poröses Netzwerk. Es hat sich gezeigt, dass die erfindungsgemäße Ausgestaltung der Mantelschicht und damit der Oberfläche des Implantats ein verbessertes Einwachsen des umgebenden Knochengewebes in das Implantat bewirkt, so dass es zu einer verkürzten Ausheilzeit, einer verbesserten Isoelastizität und dadurch zu einer erhöhten Stabilität und Lebensdauer des Implantats kommt. Die bislang üblichen Einheilzeiten von drei bis vier Monaten für Implantate im Unterkiefer und sechs Monaten für Implantate im Oberkiefer werden erfindungsgemäß somit deutlich unterboten. Ebenso wird die bislang typischerweise erreichbare Lebensdauer von zehn Jahren erfindungsgemäß erheblich übertroffen.

Das erfindungsgemäße Implantat erlaubt die Verankerung des harten Implantats in dem gemäß der natürlichen Funktion des zu ersetzenden Körperteils, beispielsweise einer Zahnwurzel, vorgesehenen hochkomplexen Netzwerk aus Collagen und elastischen Fasern. Durch die Struktur der Oberfläche des Implantats wird ein effektives Einwachsen des Knochenmaterials ermöglicht, und so ein fließender Übergang zwischen dem Knochen und dem Implantat selbst gewährleistet. Beispielsweise im Fall eines Zahnwurzelimplantats kann entsprechend der Anatomie der jeweiligen Zahnwurzel der Knochen sparsam abgetragen und geöffnet werden, damit dort eine künstliche Zahnwurzel verankert wird, welche einerseits weitgehend der Form und Kraftanleitung der etablierten Zahnwurzel entspricht und andererseits durch die patientenangepasste Oberfläche in Form eines Netzwerks das Einwachsen des umgebenden Knochens in das Implantat erleichtert.

Um beispielsweise im Kieferknochenbereich dem menschlichen Schwammknochengewebe mit einzelnen Trabekeln mit typischen Durchmessern zwischen ca. 100 - 260 µm und einem Abstand zwischen den Trabekeln zwischen 1.300 - 2.200 µm möglichst gut gerecht zu werden, kann die Struktur der Mantelschicht des Implantats entsprechend als ein Netzwerk aus Spiralen aufgebaut sein, wobei die Hohlräume typische Durchmesser zwischen ca. 200 - 500 µm, die Spiralstreben einen typischen Durchmesser von 200 - 400 µm und die Hohlräume somit einen typischen Abstand zueinander von 400 - 1000 µm besitzen.

Die die Mantelschicht aufbauenden Spiralen können zylindrische Spiralen (Wendeln bzw. Helices) sein. Sie können jedoch auch eine Konizität aufweisen, also trichterförmig ausgebildet sein. Die Konizität kann dabei für alle Spiralen gleich sein oder unterschiedlich ausgebildet sein. Das Ausbilden einer Konizität der Spiralen hat sich bezüglich des Einwachsens des Knochenmaterials als besonders vorteilhaft herausgestellt. Ebenfalls vorteilhaft bezüglich des Einwachsens des Knochenmaterials ist es, wenn die Spiralen sich hinsichtlich ihres Drehsinns unterscheiden. Insbesondere können sich jeweils in ihrer Längsrichtung benachbarte Spiralen hinsichtlich ihres Drehsinns unterscheiden. Es ist weiter bevorzugt, wenn die Spiralen sich auch hinsichtlich ihres Startpunkts und/oder der Richtung ihrer Konizität unterscheiden. Insbesondere können die Startpunkte der Spiralen zueinander versetzt sein. Die Geometrie der Spiralen kann dem goldenen Schnitt entsprechen. Es kann sich also um sogenannte goldene Spiralen handeln.

Gemäß einer weiteren Ausgestaltung kann die Größe und/oder Anzahl der Hohlräume zur Außenfläche der Mantelschicht hin zunehmen. In diesem Fall nimmt die Porosität des Netzwerks in Richtung der Oberfläche des Implantats zu. Beispielsweise im Fall einer Zahnwurzel wird das Netzwerk also in zahnwurzelferner Richtung immer offener bzw. zur Wurzel hin immer kompakter. Eine solche Ausbildung führt zu einem besonders schnellen und wirksamen Einwachsen des Knochenmaterials in das Implantat.

Es ist möglich, das Implantat einteilig auszubilden, indem das gesamte Bauteilvolumen des Implantats aus den Spiralen aufgebaut wird. Dies erleichtert die Herstellung.

Es ist auch möglich, dass das Implantat zweiteilig aufgebaut ist und einen massiven Kern aufweist, auf dem die Mantelschicht vorgesehen ist. Der massive Kern kann dabei ein von der Mantelschicht getrennter Teil sein. Auf diese Weise wird eine ausreichende Stabilität des Implantats bei hohen Belastungen, beispielsweise im Kieferbereich, sichergestellt. Es kann dann beispielsweise im Fall eines Zahnwurzelimplantats auch der untere Abschluss zum Kieferknochen und der obere Abschluss zum Abutment massiv ausgebildet sein. Auf diese Weise ist es möglich, den Kern beispielsweise durch ein spanabhebendes Verfahren herzustellen und die Mantelfläche durch ein anderes Verfahren auszubilden. Die Verbindung der beiden Teile zu einem Implantat kann beispielsweise durch einen Formschluss (Konussitz) und zusätzlich oder alternativ durch eine Verschweißung erfolgen.

Ein besonders geeignetes Material für das Implantat hinsichtlich der biologischen Verträglichkeit und Langzeitstabilität sind Titanwerkstoffe. Sofern ein massiver Kern vorgesehen ist, kann dieser beispielsweise aus Reintitan (Grade 0) gebildet sein. Die Mantelschicht kann durch eine geeignete Titanlegierung (z.B. TiAIV) gebildet werden. Auch ist beispielsweise eine TiAlNb-Legierung möglich, die gegenüber vanadiumhaltigen Legierungen eine bessere Verträglichkeit bietet.

Die Aufgabe wird außerdem durch ein Verfahren zur Herstellung zumindest einer äußeren Mantelschicht eines medizinischen Implantats, insbesondere des gesamten Implantats, gelöst, bei dem
a) ein pulverförmiger Werkstoff in einer ersten dünnen Schicht auf eine horizontale Plattform aufgebracht wird,
b) mit einem Laserstrahl gewünschte Bereiche der ersten Schicht durch thermische Einwirkung verschmolzen werden,
c) die Plattform etwa um die Dicke der ersten Schicht vertikal nach unten verfahren wird,
d) eine weitere dünne Schicht des pulverförmigen Werkstoffs auf die vorherige dünne Schicht auf die Plattform aufgebracht wird,
e) mit einem Laserstrahl gewünschte Bereiche der weiteren Schicht durch thermische Einwirkung verschmolzen werden,
f) die Verfahrensschritte c) bis e) solange wiederholt werden, bis zumindest die Mantelschicht des Implantats aus einer Vielzahl von in ihrer Längsrichtung versetzt zueinander angeordneten Spiralen aus dem Werkstoff aufgebaut ist, wobei zwischen den Spiralen Hohlräume verbleiben.

Zur Herstellung des Implantats wird also das bislang in der Medizintechnik weitestgehend ungenutzte und dem so genannten Laser Rapid Manufacturing zugeordnete Verfahren des Lasergenerierens (auch: Selective Laser Melting) für die Erzeugung von gewebespezifisch wirkenden Implantaten und Implantatoberflächen eingesetzt. Das Prinzip des Lasergenerierens basiert darauf, einen pulverförmigen Grundwerkstoff auf eine Bauplattform in sehr dünnen Schichten aufzutragen und mit einem Laserstrahl durch thermische Einwirkung sukzessive zu verschmelzen. Die Pulverkörner können dabei eine statistisch verteilte Korngröße von beispielsweise mindestens 5µm bis maximal 50µm, bevorzugt 20µm, aufweisen. Die Dicke einer solchen Schicht des pulverförmigen Grundwerkstoffs beträgt entsprechend minimal etwa 50µm. Durch einen Laserstrahl werden in jeder Schicht die jeweiligen Konturen des Werkstücks in dieser Schicht durch Verschmelzen der Pulverkörner erzeugt, bevor die Bauplattform vertikal nach unten verfahren und eine neue Schicht Pulver zur Erzeugung der nächsten Schicht aufgetragen wird. Dazu wird durch eine Einrichtung zur Pulververteilung, beispielsweise mit einem Wischer oder einer Walze, die neue Pulverschicht auf die zuvor bearbeitete Schicht aufgebracht. Das für diesen schichtweisen Aufbau des Implantats genutzte, in einzelne Schichten zerlegte 3D-Modell des Werkstücks, kann beispielsweise einem 3D-CAD-Datensatz entstammen.

Mit dem Verfahren ist es in einfacher Weise möglich, Werkstückformen zu generieren, die mit konventionellen Verfahren nicht herstellbar sind, beispielsweise komplexe aufgrund der erfindungsgemäßen Spiralnetzwerkstruktur innen ausgebildete Freiformflächen. Dadurch wiederum wird das Einwachsverhalten des umgebenden Knochens in das Implantat und damit die Einheilzeit, die Formstabilität und die Lebensdauer optimiert. Gleichzeitig besteht eine hohe Flexibilität hinsichtlich der patientenindividuellen Gestaltung eines Implantats. Im Vergleich zu konventionellen Herstellungsverfahren für Implantate wird erfindungsgemäß eine hohe Zeit- und Kostenersparnis erreicht. Die Implantate sind mit reproduzierbaren qualitativen Eigenschaften, beispielsweise Dichte, Feste, Härte und Oberflächeneigenschaften, herstellbar.

Der pulverförmige Werkstoff kann ein Metallwerkstoff, insbesondere ein Titanwerkstoff der oben genannten Art sein. Um die gewünschten Schichtbereiche mit dem Laserstrahl aufzuschmelzen, kann der Laserstrahl durch mindestens einen beweglichen Spiegel entlang der gewünschten Bereiche geführt werden.

Ein Ausführungsbeispiel der Erfindung wird nachfolgend anhand einer Zeichnung näher erläutert. Es zeigen schematisch:
- Fig. 1: eine zum Aufbau einer Mantelschicht eines erfindungsgemäßen Implantats verwendete Struktur aus in ihrer Längsrichtung versetzt zueinander angeordneten Spiralen in einer Draufsicht,
- Fig. 2: die in Fig. 1 dargestellte Struktur in einer ausschnittsweisen seitlichen Ansicht,
- Fig. 3: eine erfindungsgemäße Zahnwurzelimplantatmantelstruktur in einer perspektivischen Seitenansicht,
- Fig. 4 ein: erfindungsgemäßes Zahnwurzelimplantat in einer perspektivischen Seitenansicht, und
- Fig. 5: eine Vorrichtung zur Durchführung des erfindungsgemäßen Verfahrens.

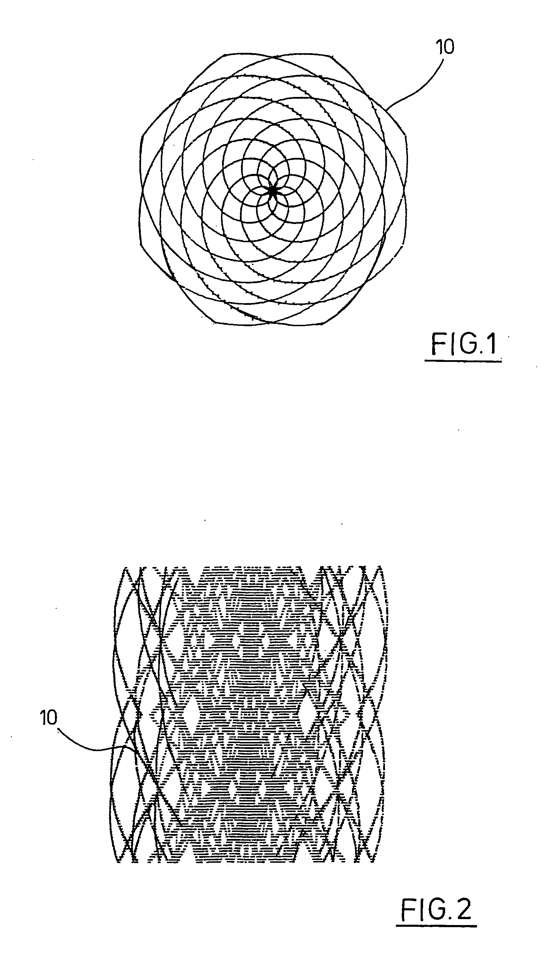

Soweit nichts anderes bestimmt ist, bezeichnen in den Figuren gleiche Bezugszeichen gleiche Gegenstände. In den Fig. 1 und 2 ist zur Veranschaulichung eine Struktur von in ihrer Längsrichtung versetzt zueinander angeordnete Spiralen 10 gezeigt, aus denen zumindest die Mantelschicht eines erfindungsgemäßen Implantats aufgebaut ist. Die Spiralen 10 sind darüber hinaus mit einer Konizität versehen und sowohl hinsichtlich ihres Startpunkts, ihres Drehsinns sowie der Richtung ihrer Konizität, also der Richtung ihrer Trichteröffnung, unterschiedlich zueinander ausgebildet. Darüber hinaus entsprechen die Spiralen in ihrer Geometrie dem goldenen Schnitt. Aus der Vielzahl solcher Spiralen 10 kann dann die Mantelschicht eines Implantats oder auch das gesamte Bauteilvolumen des Implantats aufgebaut werden.

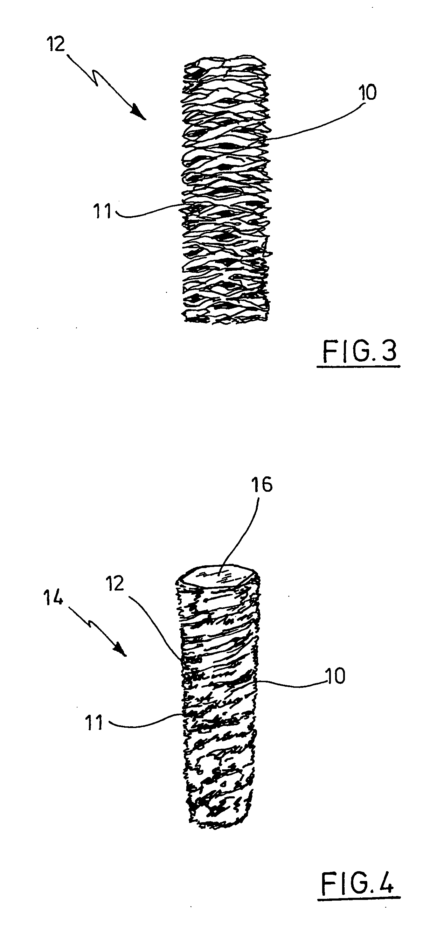

In Fig. 3 ist eine Mantelschicht 12 eines erfindungsgemäßen Zahnwurzelimplants gezeigt, das aus einer Vielzahl der in Fig. 1 und 2 gezeigten Spiralen 10 aufgebaut ist. Zwischen den Spiralen 10 verbleiben Hohlräume 11, die gemeinsam mit den Spiralen 10 ein poröses Netzwerk bilden. Dabei nimmt die Größe der Hohlräume 11 von der Innenfläche der Mantelschicht 12 zur Außenfläche der Mantelschicht 12 hin zu. In Fig. 4 ist ein vollständiges Zahnwurzelimplantat 14 gemäß der Erfindung gezeigt. Das Implantat 14 ist aus der Mantelstruktur 12 aus Fig. 3 aufgebaut, die auf einen massiven Kern 16 aufgesetzt und mit diesem zum einen durch einen konischen Formschluss und zum anderen durch eine Verschweißung verbunden ist. Der massive Kern 16 besteht aus einer Titanlegierung, beispielsweise einer TiAIV- oder TiAlNb-Legierung. Die aus den Spiralen 10 aufgebaute Mantelschicht 12 besteht dagegen aus Reintitan. Mit der erfindungsgemäßen porösen Oberflächenstruktur des Implantats 14 wird ein optimiertes Einwachsen des das Implantat 14 im eingesetzten Zustand umgebenden Kieferknochenmaterials erreicht. Dadurch wiederum verkürzt sich die Einheilzeit des Implantats 14, und die Formstabilität und damit Lebensdauer des Implantats 14 wird erhöht.

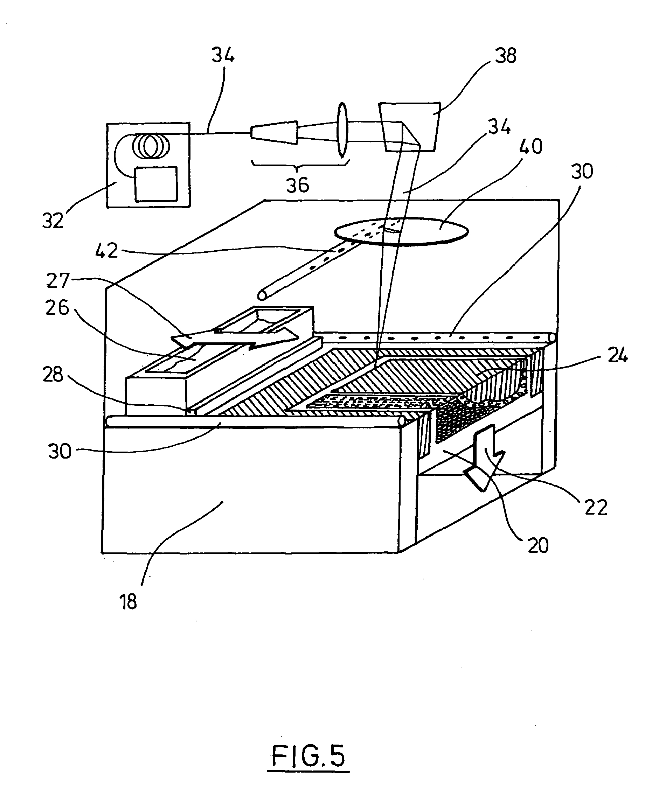

In Fig. 5 ist eine Vorrichtung zur Durchführung des erfindungsgemäßen Verfahrens dargestellt, mit dem das in Fig. 4 dargestellte Zahnwurzelimplantat 14 hergestellt werden kann. In einem Gehäuse 18 der Vorrichtung ist eine Bauplattform 20 angeordnet, die vertikal verschoben werden kann, wie durch den Pfeil 22 verdeutlicht. Auf der Bauplattform 20 befindet sich ein Pulverbett 24, vorliegend aus einem pulverförmigen Titanwerkstoff. Ein Pulverbehälter 26 enthält einen Vorrat an dem pulverförmigen Titanwerkstoff. Der Pulverbehälter 26 kann in horizontaler Richtung über dem Pulverbett 24 verschoben werden, wie durch den Pfeil 27 veranschaulicht. Dabei weist der Pulverbehälter 26 eine Pulverlippe 28 auf, mit der beim Überstreichen des Pulverbetts 24 dieses mit einer glatten Oberfläche versehen wird. Seitlich entlang der Oberfläche des Pulverbetts 24 sind Schutzgasdüsen 30 vorgesehen, die ein Schutzgas über dem Pulverbett 24 ausbringen und somit eine Schutzgasatmosphäre erzeugen. Ein Lasergerät 32, beispielsweise ein Yb-Faserlaser 32, bringt einen Laserstrahl 34 aus, der in einem Strahlkollimator 36 kollimiert und auf einen beweglichen Scannerspiegel 38 geführt wird. Über eine Bewegung des Scannerspiegels 38 kann der Laserstrahl 34 durch eine Linse 40 (F-?-Linse) auf unterschiedliche Bereiche des Pulverbetts 24 fokussiert werden und dieses an gewünschten Orten durch thermische Einwirkung verschmelzen. Weiterhin ist eine Linsenspülung 42 für die Linse 40 vorgesehen.

Im Betrieb der Vorrichtung wird zunächst eine erste Schicht des pulverförmigen Werkstoffs auf die Bauplattform 20 aufgebracht. Mit dem Laserstrahl 34 werden dann die beispielsweise gemäß einer 3D-CAD-Berechnung modellierten gewünschten Bereiche der herzustellenden Mantelschichtstruktur des Implantats mit dem Laserstrahl fokussiert und durch thermische Einwirkung verschmolzen. Anschließend wird die Bauplattform 24 um die Dicke der ersten Schicht des Werkstoffs vertikal nach unten verfahren. Danach wird eine weitere dünne Schicht des pulverförmigen Werkstoffs aus dem Pulverbehälter 26 auf die Bauplattform 20 aufgebracht. Wiederum werden mit dem Laserstrahl 34 die gewünschten Bereiche in der zweiten Schicht verschmolzen. Dieses Verfahren wird sukzessive fortgesetzt, bis auf der Bauplattform die gewünschte Mantelschicht 12 des Implantats 14 erzeugt ist.

Anschließend kann das hergestellte Bauteil aus der Bauplattform 20 entnommen werden und von dem überschüssigen Pulverwerkstoff befreit werden. Danach kann die Mantelschicht 12 mit einem beispielsweise in einem spanabhebenden Verfahren hergestellten massiven Reintitankern durch einen Konussitz und/oder eine Verschweißung verbunden werden.

## Patentansprüche

1. Medizinisches Implantat, **dadurch gekennzeichnet, dass** zumindest eine äußere Mantelschicht (12) des Implantats (14) aus einer Vielzahl von in ihrer Längsrichtung versetzt zueinander angeordneten Spiralen (10) aufgebaut ist, wobei zwischen den Spiralen (10) Hohlräume (11) verbleiben.

2. Implantat nach Anspruch 1, **dadurch gekennzeichnet, dass** die Spiralen (10) eine Konizität aufweisen.

3. Implantat nach einem der Ansprüche 1 oder 2, **dadurch gekennzeichnet, dass** die Spiralen (10) sich hinsichtlich ihres Drehsinns unterscheiden.

4. Implantat nach einem der Ansprüche 1 bis 3, **dadurch gekennzeichnet, dass** die Spiralen (10) sich hinsichtlich ihres Startpunkts und/oder der Richtung ihrer Konizität unterscheiden.

5. Implantat nach einem der vorhergehenden Ansprüche, **dadurch gekennzeichnet, dass** die Geometrie der Spiralen (10) dem goldenen Schnitt entspricht.

6. Implantat nach einem der vorhergehenden Ansprüche, **dadurch gekennzeichnet, dass** die Größe und/oder Anzahl der Hohlräume (11) zur Außenfläche der Mantelschicht (12) hin zunimmt.

7. Implantat nach einem der vorhergehenden Ansprüche, **dadurch gekennzeichnet, dass** das gesamte Bauteilvolumen des Implantats (14) aus den Spiralen (10) aufgebaut ist.

8. Implantat nach einem der vorhergehenden Ansprüche, **dadurch gekennzeichnet, dass** das Implantat (14) einteilig ausgebildet ist.

9. Implantat nach einem der vorhergehenden Ansprüche, **dadurch gekennzeichnet, dass** das Implantat (14) einen massiven Kern (16) aufweist, auf dem die Mantelschicht (12) vorgesehen ist.

10. Implantat nach Anspruch 9, **dadurch gekennzeichnet, dass** das Implantat (14) mehrteilig aufgebaut ist, wobei der massive Kern (16) ein von der Mantelschicht (12) getrennter Teil ist.

11. Implantat nach Anspruch 10, **dadurch gekennzeichnet, dass** es zumindest teilweise aus einem Titanwerkstoff besteht.

12. Implantat nach einem der vorhergehenden Ansprüche, hergestellt mit einem Verfahren gemäß einem der nachfolgenden Ansprüche.

13. Verfahren zur Herstellung zumindest einer äußeren Mantelschicht eines medizinischen Implantats, bei dem
a) ein pulverförmiger Werkstoff (24) in einer ersten dünnen Schicht auf eine horizontale Plattform (20) aufgebracht wird,
b) mit einem Laserstrahl (34) gewünschte Bereiche der ersten Schicht durch thermische Einwirkung verschmolzen werden,
c) die Plattform (20) etwa um die Dicke der ersten Schicht vertikal nach unten verfahren wird,
d) eine weitere dünne Schicht des pulverförmigen Werkstoffs (24) auf die vorherige dünne Schicht auf die Plattform (20) aufgebracht wird,
e) mit einem Laserstrahl (34) gewünschte Bereiche der weiteren Schicht durch thermische Einwirkung verschmolzen werden,
f) die Verfahrensschritte c) bis e) solange wiederholt werden, bis zumindest die Mantelschicht (12) des Implantats (14) aus einer Vielzahl von in ihrer Längsrichtung versetzt zueinander angeordneten Spiralen (10) aus dem Werkstoff (24) aufgebaut ist, wobei zwischen den Spiralen (10) Hohlräume (11) verbleiben.

14. Verfahren nach Anspruch 13, **dadurch gekennzeichnet, dass** der pulverförmige Werkstoff (24) ein Metallwerkstoff (24), insbesondere ein Titanwerkstoff (24), ist.

15. Verfahren nach Anspruch 13 oder 14, **dadurch gekennzeichnet, dass** der Laserstrahl (24) durch mindestens einen beweglichen Spiegel (38) entlang der gewünschten Bereiche geführt wird.

16. Verfahren nach einem der Ansprüche 13 bis 15, **dadurch gekennzeichnet, dass** mit dem Verfahren das gesamte Implantat (14) hergestellt wird.

17. Verfahren nach einem der Ansprüche 13 bis 16, **dadurch gekennzeichnet, dass** das Implantat gemäß einem der Ansprüche 1 bis 11 ausgebildet ist.
